Europäisches Patentamt

European Patent Office

Office européen des brevets

(11) Numéro de publication: **0 309 407**
**A1**

(12) **DEMANDE DE BREVET EUROPEEN**

(21) Numéro de dépôt: **88810634.1**

(22) Date de dépôt: **16.09.88**

(51) Int. Cl.⁴: **H 02 J 13/00**
**G 08 B 1/08**

(30) Priorité: **22.09.87 CH 3657/87**

(43) Date de publication de la demande:
**29.03.89 Bulletin 89/13**

(84) Etats contractants désignés:
**AT BE DE ES FR GB GR IT NL SE**

(71) Demandeur: **TRANSEC FINANCIERE S.A.**
**15, boulevard Royal**
**L-1010 Luxenbourg (LU)**

(72) Inventeur: **Favre, Didier**
**5, chemin des Vignes**
**CH-1258 Perly (CH)**

**Lechner, Heinz**
**9, chemin de Broye**
**CH-1020 Renens (CH)**

(74) Mandataire: **Ardin, Pierre et al**
**PIERRE ARDIN & CIE 22, rue du Mont-Blanc**
**CH-1201 Genève (CH)**

(54) **Dispositif de surveillance.**

(57) Le dispositif de surveillance présente un boîtier (1) muni d'un culot à vis (2), ce qui permet de le mettre en place en le vissant simplement dans une douille destinée à recevoir une ampoule électrique.

# FIG. 1

EP 0 309 407 A1

## Description

### Dispositif de surveillance

On connaît déjà des dispositifs de surveillance qui sont alimentés par le réseau électrique. Ces dispositifs peuvent être sensibles à divers phénomènes tels que par exemple la présence de fumée ou une élévation anormale de la température, ceci dans le cas des détecteurs d'incendie. Ces dispositifs peuvent également comprendre un capteur sensible aux rayons infrarouge, par exemple pour détecter la présence d'un intrus dans un local à surveiller.

Dans les dispositifs connus de ce genre il était jusqu'alors nécessaire de prévoir un câble de connexion pour relier le détecteur au réseau et en outre il fallait prévoir des moyens de fixation du détecteur, par exemple à une paroi d'un local à surveiller.

La présente invention a pour but de supprimer ces travaux d'installation. A cet effet, elle a pour objet un dispositif de surveillance d'un endroit pourvu d'une installation d'éclairage électrique, cette installation comprenant des moyens pour connecter au réseau d'alimentation électrique un élément éclairant, ce dispositif comprenant un capteur sensible à un phénomène à surveiller, caractérisé en ce que ce dispositif comprend un boîtier muni de contacts semblables à ceux de l'élément éclairant, de façon à pouvoir être relié au réseau en le substituant audit élément éclairant.

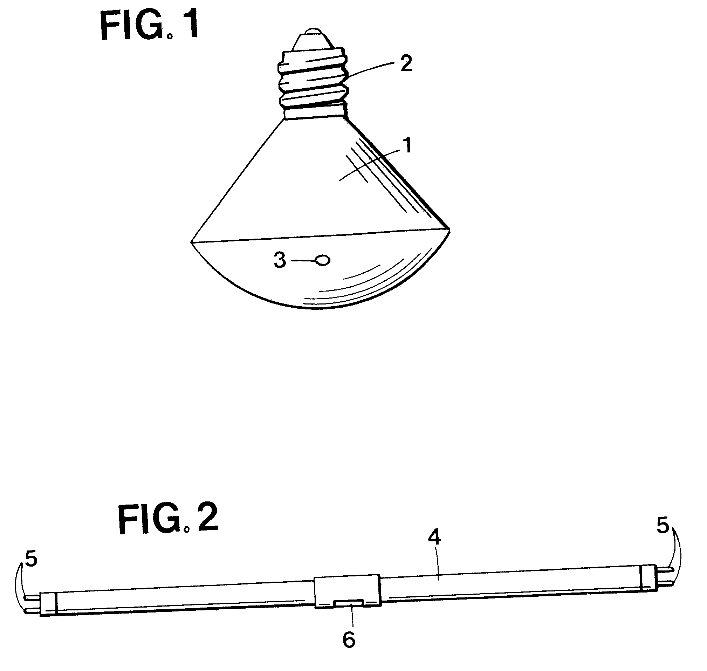

Les figures 1 et 2 du dessin annexé représentent schématiquement et à titre d'exemple deux formes d'exécution du dispositif faisant l'objet de l'invention.

La figure 1 montre la première forme d'exécution dans laquelle le dispositif comprend un boîtier 1 muni d'un culot à vis 2 permettant de le placer dans une douille destinée à recevoir une ampoule d'éclairage. Ce dispositif comprend un capteur logé dans le boîtier 1 et un émetteur rendu actif par ce capteur, cet émetteur pouvant être du genre décrit dans le brevet suisse N° 642.208. Le boîtier 1 comprend encore une lampe témoin 3, par exemple diode lumineuse, qui indique si le dispositif de surveillance est correctement relié au réseau. Le signal envoyé est reçu en un autre point du réseau par un appareil récepteur prévu à cet effet. Il est clair que l'émetteur pourrait être prévu pour l'émission d'ondes hertziennes qui pourraient être captées par tout récepteur-radio prévu à cet effet, ou même que l'émetteur pourrait simplement produire un signal d'alarme accoustique ou optique.

Ce témoin lumineux est très utile car les lampes d'éclairage sont généralement reliées au réseau par un interrupteur et il est clair que si l'interrupteur est ouvert, le dispositif de surveillance ne peut pas fonctionner. Ce témoin lumineux permet donc à l'usager de vérifier que l'interrupteur n'a pas été ouvert par inadvertance.

La figure 2 montre une forme d'exécution dans laquelle le boîtier 4 du dispositif de surveillance présente sensiblement la forme d'un tube fluorescent d'éclairage et peut donc être substitué à un tel tube. Ce dispositif présente à chacune des extrémités du boîtier deux broches 5 correspondant aux doigts de contact dont sont munis les tubes d'éclairage habituels.

Ce tube présente un détecteur 6 qui est monté tournant sur le boîtier, de façon à permettre de l'orienter dans la direction désirée, quelle que soit la position des broches 5 lorsque le dispositif est monté sur un socle pour tube luminescent.

Le dispositif selon l'invention est très avantageux, car non seulement il permet d'éviter tous travaux d'installation, mais encore les éléments d'éclairage sont le plus souvent situés au-dessus d'une zone à surveiller, soit au plafond d'un local, soit contre un mur ou sur un poteau lors de l'éclairage d'un endroit extérieur. Ainsi les emplacements où l'un peut fixer de tels dispositifs de surveillance sont favorables pour permettre une surveillance efficace.

Il est aussi possible de fixer le dispositif de surveillance dans une lampe mobile, par exemple une lampe de chevet ou de travail.

De toute façon, le dispositif présente l'avantage d'être alimenté par le réseau, ce qui évite bon nombre de problèmes liés à l'alimentation par piles.

### Revendications

1. Dispositif de surveillance d'un endroit pourvu d'une installation d'éclairage électrique, cette installation comprenant des moyens pour connecter au réseau d'alimentation électrique un élément éclairant, ce dispositif comprenant un capteur sensible à un phénomène à surveiller, **caractérisé** en ce que ce dispositif comprend un boîtier muni de contacts semblables à ceux de l'élément éclairant, de façon à pouvoir être relié au réseau en le substituant audit élément éclairant.

2. Dispositif selon la revendication 1, **caractérisé** en ce qu'il comprend un émetteur rendu actif par ledit capteur pour envoyer sur le réseau un signal électrique de fréquence plus élevée que celle du réseau.

3. Dispositif selon la revendication 1 ou 2, **caractérisé** en ce que le boîtier est muni d'un culot à vis ou à baïonnette pour permettre de l'engager dans une douille prévue pour une ampoule électrique.

4. Dispositif selon la revendication 1 ou 2, **caractérisé** en ce que son boîtier a la forme générale d'un tube fluorescent d'éclairage.

5. Dispositif selon l'une des revendications précédentes, **caractérisé** en ce qu'il comprend un témoin lumineux sensible à la tension d'alimentation et indiquant que le dispositif est correctement relié au réseau.

**FIG. 1**

**FIG. 2**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 166 259 (F. MAHLMEISTER) * Page 5, ligne 25 - page 7, ligne 25; figures 1-10 * | 1,2 | H 02 J 13/00 G 08 B 1/08 |
| A | --- | 3,4 | |
| Y | DE-A-3 503 791 (H.J. SCHAAD) * Revendications 1,2,11,13; figures * | 1,2 | |
| A | --- | 3,5 | |
| A | GB-A-2 119 605 (MUCKENHAUPT GmbH) * Page 1, ligne 99 - page 2, ligne 19; figure 1 * | 1,2 | |
| A | US-A-4 090 178 (E.G. NORRIS) * Colonne 2, ligne 36 - colonne 3, ligne 9; figure 1 * | 1 | |
| A | US-A-4 255 746 (R.W. JOHNSON) * Colonne 2, ligne 42 - colonne 4, ligne 22; figures 1,2 * | 1 | |
| A,D | WO-A-8 203 299 (P. ARDIN & CIE) * Abrégé * ----- | 2 | |

DOMAINES TECHNIQUES RECHERCHES (Int. Cl.4)

H 02 J
G 08 B
H 05 B

Le présent rapport a été établi pour toutes les revendications

| Lieu de la recherche | Date d'achèvement de la recherche | Examinateur |
|---|---|---|
| LA HAYE | 21-11-1988 | FOURRICHON,P.M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant